# EUROPÄISCHE PATENTSCHRIFT

(11) **EP 3 420 202 B1**
(45) Veröffentlichungstag und Bekanntmachung des Hinweises auf die Patenterteilung: **27.07.2022**
(21) Anmeldenummer: 17716485.2
(22) Anmeldetag: 31.03.2017
(51) Int. Cl.: F01K 23/10

(54) **KONDENSATREZIRKULATION**
CONDENSATE RECIRCULATION
RECIRCULATION DE CONDENSAT

(30) Priorität: 17.06.2016 DE 102016210894
(43) Veröffentlichungstag der Anmeldung: 02.01.2019
(73) Patentinhaber: Siemens Energy Global GmbH & Co. KG, 81739 München (DE)
(72) Erfinder: JURETZEK, Uwe, 91058 Erlangen (DE)
(86) Internationale Anmeldenummer: PCT/EP2017/057727
(87) Internationale Veröffentlichungsnummer: WO 2017/215804

(56) Entgegenhaltungen:
- EP-A1- 2 138 677
- EP-A1- 2 426 337
- EP-A1- 2 626 532
- DE-C1- 19 512 466
- JP-A- H06 241 005
- US-A- 5 357 746

## Beschreibung

Die Erfindung betrifft eine Gas- und Dampfturbinenanlage mit Kondensatrezirkulation sowie ein Verfahren zur Kondensatrezirkulation in einer Gas- und Dampfturbinenanlage.

Die bei Gas- und Dampfturbinenanlagen (GUD) eingesetzten Brennstoffe weisen unter anderem mehr oder weniger hohe Schwefelgehalte auf. Zusammen mit dem bei der Verbrennung von Gas bzw. Öl entstehenden Wasseranteil besteht die Gefahr, dass sich bei Unterschreitung der entsprechenden Abgastaupunkte Schwefelsäure, schweflige Säure, Wasser, etc., im "kalten" Teil des Abhitzedampferzeugers (insbesondere Kondensatvorwärmer) niederschlagen und zu Korrosion und am Ende zu Bauteilversagen führen. Dieses Problem ist insbesondere bei Brennstoffen mit hohen Schwefelgehalten ausgeprägt. Zur Vermeidung der Unterschreitung des Abgastaupunktes und dem damit verbundenen Wasser-/ Säureanfall (insbesondere Schwefelsäure) muss die Kondensattemperatur bei einer Gas- und Dampfturbinenanlage vor Eintritt des Kondensates in den Kondensatvorwärmer des Abhitzedampferzeugers auf eine entsprechende Mindesttemperatur angehoben werden. Hintergrund ist: Der Wärmeübergang wird von der Wasserseite her bestimmt, d.h. die abgasseitige Rohrwandungstemperatur entspricht ungefähr der innen anliegenden Kondensattemperatur. Die Kondensattemperatur ist wiederum durch die definierten Rückkühlbedingungen (Kühlungsart, Auslegung des Kühlsystems, Umgebungsbedingungen, etc.) gesetzt. Die Mindesteintrittstemperatur des Kondensates zur Vermeidung der Abgastaupunktunterschreitung wird bisher meist durch Rezirkulation von Heißwasser vom Kondensatvorwärmeraustritt zum Kondensatvorwärmereintritt mittels separater elektrisch betriebener Rezirkulationspumpen bzw. einer entsprechenden Anzapfung der Speisewasserpumpen sichergestellt.

Diesen bisherigen Lösungen ist gemein, dass sie einen relativ hohen Aufwand an Komponenten bedeuten (durch vergleichsweise große Rezirkulationspumpen, etc.) und Leistung/Wirkungsgrad des Kraftwerkes verschlechtern (durch den elektrischen Eigenbedarf der verwendeten Komponenten).

Dieser Aufwand wird dabei immer größer je höher der Schwefelgehalt im Brennstoff ist. Bei steigenden Schwefelgehalten tritt dabei der Verlust von Leistung und Wirkungsgrad im Dampfteil der Gas- und Dampfturbinenanlage immer weiter in den Vordergrund, da bei steigendem Schwefelgehalt die noch nutzbare Wärme (nutzbar ist nur die Wärme oberhalb des Taupunktes) stromab des Niederdruckverdampfers nicht mehr ausreicht, um das Kondensat ausreichend vorzuwärmen und deshalb höherwertige Wärme aus dem heißeren Bereich des Abhitzedampferzeugers genutzt werden muss (z.B. durch Anstauen des Niederdruckverdampfers). Diese höherwertige Wärme steht damit auch nicht mehr zur Dampfproduktion zur Verfügung und die Leistung und der Wirkungsgrad der Gas- und Dampfturbinenanlage sinken deutlich.

Die US 5,357,746 A offenbart beispielsweise eine Gas- und Dampfturbinenanlage, die Wärme aus dem heißen Abgas zum einen für die Kondensatvorwärmung und zum anderen für die Brennstoffvorwärmung verwendet wird. EP 2 426 337 A1, EP 2 138 677 A1 und JP H06 241005 offenbaren ebenfalls eine Kondensatvorwärmung durch Wärme aus dem Abgas einer Gasturbine.

Bei noch weiter steigenden Schwefelgehalten ist zur Vorwärmung des Kondensates aus der Dampfturbine angezapfter oder speziell nur zur Kondensatvorwärmung im Abhitzedampferzeuger erzeugter Dampf zu verwenden. Dieser Dampf steht der Dampfturbine nicht mehr zur Verfügung und Leistung und Wirkungsgrad der Gas- und Dampfturbinenanlage sinken noch weiter.

Aufgabe der Erfindung ist es, eine Gas- und Dampfturbinenanlage mit verbesserter Kondensatrezirkulation bereitzustellen. Eine weitere Aufgabe der Erfindung ist es, ein entsprechendes Verfahren zur Kondensatrezirkulation in einer Gas- und Dampfturbinenanlage anzugeben.

Die Erfindung löst die auf eine Gas- und Dampfturbinenanlage gerichtete Aufgabe, indem sie eine Gas- und Dampfturbinenanlage gemäß Anspruch 1 vorsieht.

In der Regel wird zur Wirkungsgradsteigerung von Gas- und Dampfkraftanlagen der gasförmige Brennstoff der Gasturbine mittels Abgaswärme bis auf ca. 215°C vorgewärmt. Dazu wird ein Teilstrom vom Austritt des Mitteldruck-Speisewasservorwärmers abgezweigt, der seine Wärme über einen Wärmetauscher an das Brenngas überträgt. Dieser dann stark abgekühlte (z.B. ca. 70°C) Mitteldruckspeisewassermassenteilstrom wird dem im Abhitzedampferzeuger aufzuwärmenden Kondensat beigemischt und dabei von ca. 60bar auf das dort herrschende Druckniveau von ca. 25bar gedrosselt. Zur Nutzung dieser bisher weggedrosselten Druckenergie soll nun erfindungsgemäß eine Strahlpumpe eingesetzt werden, welche den Mitteldruckspeisewassermassenteilstrom nach dem Passieren des Brennstoffvorwärmers als Treibflüssigkeit nutzt und damit Kondensat vom Kondensatvorwärmeraustritt (Temperatur z.B. ca. 150°C) ansaugt. Der resultierende Gemischstrom wird dem Kondensatstrom vor Eintritt in die Kondensatvorwärmerheizflächen des Abhitzedampferzeugers beigemischt und somit die Temperatur des Gesamtmassenstromes auf das zur Vermeidung der Unterschreitung von Taupunkten notwendige Maß angehoben.

In einer vorteilhaften Ausführungsform ist ein Ausgang der Speisewasserpumpe in den Treibmediumeingang der Strahlpumpe schaltbar. Für den Fall, dass neben dem Hauptbrennstoff Gas auch ein flüssiger Reservebrennstoff genutzt werden soll, und der Brenngasvorwärmer somit als Wärmesenke naturgemäß nicht nutzbar ist, sind nämlich alternative Maßnahmen zur Senkung der Treibmassenstromtemperatur zu ergreifen, da es sonst zu unerwünschten Ausdampfungserscheinungen in der Strahlpumpe kommen würde. Eine mögliche Maßnahme ist die Nutzung von noch nicht weiter erwärmtem Mitteldruckspeisewasser vom Austritt der Mitteldruckspeisewasserpumpe als Treibflüssigkeit.

In diesem Zusammenhang ist in einer weiteren vorteilhaften Ausführungsform eine Regelarmatur zum Umschalten zwischen Speisewasser aus dem Speisewasservorwärmer und Wasser aus der Speisewasserpumpe oder Mischen von Speisewasser aus dem Speisewasservorwärmer und Wasser aus der Speisewasserpumpe vorgesehen. Damit wäre auch ein Mischen der Treibflüssigkeit aus "heißem" und "kaltem" Speisewasser denkbar.

In einer alternativen Ausführungsform ist zwischen Eingang und Ausgang des Speisewasservorwämers eine Speisewasserentnahmestelle vorgesehen, die in den Treibmediumeingang der Strahlpumpe schaltbar ist. Somit lässt sich Speisewasser temperaturrichtig der Strahlpumpe zuführen, ohne dass eine Mischung zweier unterschiedlich temperierter Speisewasserströme notwendig wäre.

Bei einer weiteren vorteilhaften Ausführungsform ist ein Wärmetauscher primärseitig in eine Leitung zum Treibmediumeingang der Strahlpumpe und sekundärseitig in die Kondensatleitung geschaltet. Diese Ausführungsform, bei der die Temperatur des Treibmassenstromes in einem Wärmetauscher durch Kondensat aus dem Kondensator-Hotwell rückgekühlt wird, ermöglicht vergleichsweise hohe Kondensateintrittstemperaturen, was bei den in der Regel schwefelhaltigen flüssigen Brennstoffen von Vorteil ist.

Für besonders hohe Schwefelgehalte im Brennstoff (ggf. in Kombination mit niedrigen Kondensatordrücken) kann es sein, dass die Kondesatrezirkulation mittels Strahlpumpe allein nicht mehr ausreicht, um die gewünschte Mindesteintrittstemperatur in den Kondensatvorwärmer des Kessels zu erreichen.

In diesem Fall kann die Strahlpumpenlösung problemlos mit weiteren Maßnahmen zur Erhöhung der Kondensateintrittstemperatur kombiniert werden (z.B. Nutzung von Anzapfdampf aus der Dampfturbine). Gerade falls der schwefelhaltige Brennstoff nur als Notbrennstoff eingesetzt wird und der Wirkungsgrad in diesem Fall als sekundär zu betrachten ist, kann aber auch durch einfache kostengünstige Maßnahmen (z.B. Öffnung des Kaltbypass) die notwendige Temperaturerhöhung erreicht werden.

Die Menge des Austrittsmassenstromes der Strahlpumpe (der Rezirkulationsmassenstrom) kann auf verschiedene Weise und bedarfsgerecht geregelt werden, auch wenn immer die Anforderung besteht, die Menge an Heizmedium für den Brenngasvorwärmer unabhängig davon bereitzustellen. Beispielsweise kann in einer vorteilhaften Ausführungsform eine Umführungsleitung für ein Treibmedium um die Strahlpumpe herumführt werden, wobei in der Umführungsleitung ein Treibmassenstromregelventil angeordnet ist, so dass der Treibmassenstrom über diesen geregelten Bypass ganz oder teilweise an der Strahlpumpe vorbeigeleitet werden kann. Auch eine ggf. additive Regelung des Saugmassenstromes oder des die Strahlpumpe verlassenden Gemischstromes ist denkbar.

Schließlich ist es vorteilhaft, wenn ein weiterer Ausgang der Speisewasserpumpe mit einem gegenüber dem Ausgang (Mitteldruckspeisewasserentnahme) erhöhten Druckniveau oder ein Ausgang einer weiteren Speisewasserpumpe mit gegenüber der Speisewasserpumpe erhöhtem Druckniveau in einen Treibmediumeingang einer weiteren Strahlpumpe mündet, deren Saugmediumeingang ebenfalls mit einem Austritt des Kondensatvorwärmers und deren Austritt ebenfalls mit der Kondensatleitung verbunden ist, so dass beide Strahlpumpen parallel Kondensat rezirkulieren. Dadurch lässt sich Speisewasser verschiedener Temperatur und Druckstufen für die Vorwärmung von Brenngas aber auch für die Kondensatrezirkulation und -vorwärmung nutzen. Beim Ölbetrieb, bei dem der Dampfmassenstrom sinkt, kann beispielsweise ungenutzter Speisewasserstrom sinnvoll eingesetzt werden.

Die auf ein Verfahren gerichtete Aufgabe wird gelöst durch ein Verfahren zur Kondensatrezirkulation in einer Gas- und Dampfturbinenanlage, gemäß Anspruch 8.

Vorteilhafterweise wird im Flüssigbrennstoffbetrieb der Gas- und Dampfturbinenanlage Speisewasser vor Eintritt in den Abhitzedampferzeuger als Treibmassenstrom in der Strahlpumpe genutzt.

Weiterhin ist es vorteilhaft, wenn eine Temperatur des als Treibmassenstrom für die Strahlpumpe verwendeten Speisewassers geregelt wird, indem zwischen Speisewasser vor Eintritt in den Abhitzedampferzeuger und erhitztem Speisewasser umgeschaltet wird oder diese geeignet gemischt werden.

Es kann zweckmäßig sein, wenn für einen Betrieb der Strahlpumpe dem Speisewasservorwärmer Speisewasser an einer Speisewasserentnahmestelle entnommen wird, die in Strömungsrichtung des Speisewassers stromauf eines Ausgangs des Speisewasservorwärmers angeordnet ist.

Ferner ist es vorteilhaft, wenn eine Temperatur des Treibmassenstroms im Wärmetausch mit dem Kondensatstrom verringert wird.

Es ist ebenfalls vorteilhaft, wenn der Treibmassenstrom bei Bedarf geregelt über eine Umführungsleitung ganz oder teilweise an der Strahlpumpe vorbeigeleitet wird.

Schließlich ist es forteilhaft, wenn Speisewasser verschiedener Druckstufen als Treibmassenstrom für Strahlpumpen genutzt wird.

Mit der Erfindung kann ein bisher ungenutztes Druckgefälle aus dem Rücklauf des Heizmediums des Brennstoffvorwärmers mittels einer Strahlpumpe genutzt werden, die die Aufgabe hat, heißes Kondensat vom Austritt des Kondensatvorwärmers anzusaugen und den resultierenden Gemischstrom zur Mischung mit dem Kondensat aus dem Kondensator-Hotwell und damit zur Anhebung der Kondensateintrittstemperatur zu nutzen.

Mit dieser Nutzung sind einige Vorteile verbunden. Die bisherigen elektrisch angetriebenen Rezirkulationspumpen können ganz entfallen oder zumindest in ihrer Größe stark reduziert werden, woraus sich deutliche Einsparungen beim Eigenbedarf des Kraftwerkes ergeben. Außerdem sind Strahlpumpen im Vergleich zu Kreiselpumpen sehr einfach aufgebaute und damit preisgünstige Komponenten die zudem noch mit weniger Versorgungs-/ Hilfseinrichtungen (kein Antriebsmotor, kein Fundament, etc.,) auskommen, woraus sich eine entsprechende deutliche Kosteneinsparung ergibt. Ferner enthalten Strahlpumpen keine bewegliche Teile, benötigen selbst keine elektrische Versorgung, etc. und sind somit deutlich zuverlässiger als Kreiselpumpen, damit wird eine entsprechende - bisher übliche - pumpenseitige Redundanz unnötig, auch daraus resultiert wiederum eine Kosteneinsparung.

Bei Gas- und Dampfturbinenanlagen mit mehreren Abhitzedampferzeugern bietet es sich an, jedem Abhitzedampferzeuger eine passend dimensionierte Strahlpumpe in unmittelbarer Nähe zuzuordnen. Daraus resultieren Einsparungen bei den Rohrleitungen und eine verbesserte Anpassbarkeit des Strahlpumpenbetriebes an die Bedürfnisse des jeweiligen Abhitzedampferzeugers.

Die Erfindung wird beispielhaft anhand der Zeichnungen näher erläutert. Es zeigen schematisch und nicht maßstäblich:
- Figur 1: eine Gas- und Dampfturbinenanlage mit einer Kondensatrezirkulation nach dem Stand der Technik,
- Figur 2: eine Gas- und Dampfturbinenanlage mit einer Kondensatrezirkulation nach der Erfindung für den Gasbetrieb,
- Figur 3: eine Gas- und Dampfturbinenanlage mit einer Kondensatrezirkulation nach der Erfindung insbesondere für den Ölbetrieb mit Alternativen für die Kondensatrezirkulation und
- Figur 4: eine Gas- und Dampfturbinenanlage mit einer Kondensatrezirkulation nach der Erfindung mit Teilmassenstromregelventil.

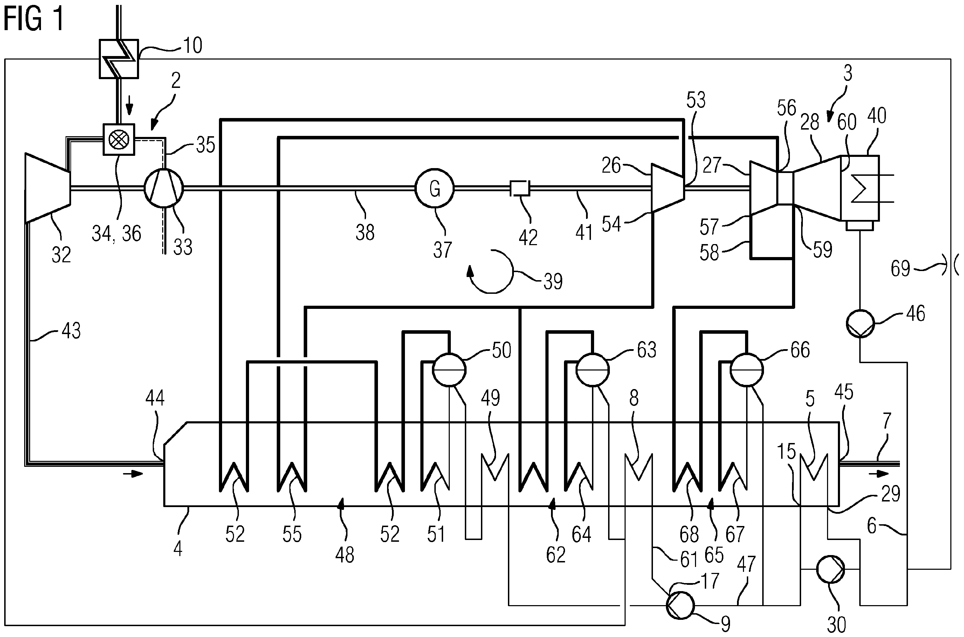

Die Gas- und Dampfturbinenanlage gemäß der Figur 1 umfasst eine Gasturbine 2 und eine Dampfturbine 3. Die Gasturbine 2 umfasst eine Turbine 32 mit angekoppeltem Luftverdichter 33 und eine der Turbine 32 vorgeschaltete Brennkammer 34, die an eine Druckluftleitung 35 des Verdichters 33 angeschlossen ist. Die Brennkammer 34 weist mindestens einen Brenner 36 auf. Die Turbine 32 und der Luftverdichter 33 sowie ein Generator 37 sind auf einer gemeinsamen Welle 38 angeordnet.

Der Dampfturbine 3 ist in einem Wasser-Dampf-Kreislauf 39 ein Kondensator 40 nachgeschaltet. Ferner umfasst der Wasser-Dampf-Kreislauf 39 einen Abhitzedampferzeuger 4. Die Dampfturbine 3 besteht aus einer ersten Druckstufe 26 oder einem Hochdruckteil und einer zweiten Druckstufe 27 oder einem Mitteldruckteil. Weiterhin ist eine dritte Druckstufe 28 oder ein Niederdruckteil der Dampfturbine 3 vorgesehen, wobei die Druckstufen 26, 27, 28 über eine gemeinsame Welle 41 mit einer Kupplung 42 den Generator 37 antreiben.

Zum Zuführen von in der Gasturbine 2 entspanntem Arbeitsmittel oder Rauchgas in den Abhitzedampferzeuger 4 ist eine Abgasleitung 43 an einen Eingang 44 des Abhitzedampferzeugers 4 angeschlossen. Das entspannte Arbeitsmittel aus der Gasturbine 2, d.h. das Gasturbinenabgas 7, verlässt den Abhitzedampferzeuger 4 über dessen Ausgang 45 in Richtung auf einen nicht näher dargestellten Kamin.

Der Abhitzedampferzeuger 4 umfasst einen Kondensatvorwärmer 5, der eingangsseitig über eine Kondensatleitung 6 in die eine Kondensatpumpeneinheit 46 geschaltet ist, mit Kondensat aus dem Kondensator 40 bespeisbar ist. Der Kondensatvorwärmer 5 ist ausgangsseitig über eine Leitung 47 an eine Hochdruckspeisepumpe 9 mit Mitteldruckentnahme 17 geschlossen.

Die Hochdruckspeisepumpe 9 bringt das Speisewasser auf ein für eine dem Hochdruckteil 26 der Dampfturbine 3 zugeordnete Hochdruckstufe 48 im Wasser-Dampfkreislauf 39 geeignetes Druckniveau. Das unter hohem Druck stehende Speisewasser ist der Hochdruckstufe 48 über einen Speisewasservorwärmer 49 zuführbar, der ausgangsseitig an eine Hochdrucktrommel 50 angeschlossen ist. Die Hochdrucktrommel 50 ist mit einem im Abhitzedampferzeuger 4 angeordneten Hochdruckverdampfer 51 zur Bildung eines Wasser-Dampfumlaufs verbunden. Zum Abführen von Frischdampf ist die Hochdrucktrommel 50 an einen im Abhitzedampferzeuger 4 angeordneten Hochdrucküberhitzer 52 angeschlossen, der ausgangsseitig mit dem Dampfeinlass 53 des Hochdruckteils 26 der Dampfturbine 3 verbunden ist.

Der Dampfauslass 54 des Hochdruckteils 26 der Dampfturbine 3 ist über einen Zwischenüberhitzer 55 an den Dampfeinlass 56 des Mitteldruckteils 27 der Dampfturbine 3 angeschlossen. Dessen Dampfauslass 57 ist über eine Überströmleitung 58 mit dem Dampfeinlass 59 des Niederdruckteils 28 der Dampfturbine 3 verbunden. Der Dampfauslass 60 des Niederdruckteils 28 der Dampfturbine 3 ist an den Kondensator 40 angeschlossen, so dass ein geschlossener Wasser-Dampf-Kreislauf 39 entsteht.

Von der Hochdruckspeisepumpe 9 zweigt zudem an einem Ausgang 17, an dem das Kondensat einen mittleren Druck erreicht hat (weshalb der Ausgang 17 auch als Mitteldruckentnahme 17 bezeichnet wird), eine Zweigleitung 61 ab. Diese ist über einen weiteren Speisewasservorwärmer 8 oder Mitteldruck-Economiser mit einer dem Mitteldruckteil 27 der Dampfturbine 3 zugeordneten Mitteldruckstufe 62 des Wasser-Dampf-Kreislaufs 39 verbunden. Der zweite Speisewasservorwärmer 8 ist dazu ausgangsseitig an eine Mitteldrucktrommel 63 der Mitteldruckstufe 62 angeschlossen. Die Mitteldrucktrommel 63 ist mit einer im Abhitzedampferzeuger 4 angeordneten, als Mitteldruckverdampfer 64 ausgebildeten Heizfläche zur Bildung eines Wasser-Dampf-Umlaufs verbunden. Zum Abführen von Mitteldruck-Frischdampf ist die Mitteldrucktrommel 63 an den Zwischenüberhitzer 55 und somit an den Dampfeinlass 56 des Mitteldruckteils 27 der Dampfturbine 3 angeschlossen.

Die Kondensatleitung 6 mündet in eine dem Niederdruckteil 28 der Dampfturbine 3 zugeordnete Niederdruckstufe 65 es Wasser-Dampf-Kreislaufs 39. Die Niederdruckstufe 65 umfasst eine Niederdrucktrommel 66, die mit einer im Abhitzedampferzeuger 4 angeordneten, als Niederdruckverdampfer 67 ausgebildeten Heizfläche zur Bildung eines Wasser-Dampf-Umlaufs verbunden ist. Zum Abführen von Niederdruck-Frischdampf ist die Niederdrucktrommel 66 über eine Dampfleitung, in die ein Niederdrucküberhitzer 68 geschaltet ist, an die Überströmleitung 58 angeschlossen. Der Wasser-Dampf-Kreislauf 39 der Gas- und Dampfturbinenanlage der Figur 1 umfasst somit drei Druckstufen. Alternativ können aber auch weniger, insbesondere zwei Druckstufen vorgesehen sein.

Nach dem Stand der Technik kann zur Wirkungsgradsteigerung die Vorwärmung eines gasförmigen Brennstoffs für die Gasturbine 2 mittels Abgaswärme erfolgen. Dazu wird ein Teilstrom vom Austritt des Mitteldruck-Speisewasservorwärmers 8 abgezweigt, der seine Wärme über eine Brennstoffvorwärmung 10 (d.h. einen Wärmetauscher) an das Brenngas überträgt. Dieser dann stark abgekühlte (z.B. ca. 70°C) Mitteldruckspeisewassermassenteilstrom wird dem im Abhitzedampferzeuger 4 aufzuwärmenden Kondensat beigemischt und dabei von ca. 60bar auf das dort herrschende Druckniveau von ca. 25bar gedrosselt 69.

Zur Vermeidung der Unterschreitung des Abgastaupunktes am "kalten Ende" des Abhitzedampferzeugers 4 wird nach dem Stand der Technik Heißwasser vom Austritt 15 des Kondensatvorwärmers 5 zum Eintritt 29 des Kondensatvorwärmers 5 bzw. zur Kondensatleitung 6 mittels separater elektrisch betriebener Rezirkulationspumpen 30 rezirkuliert.

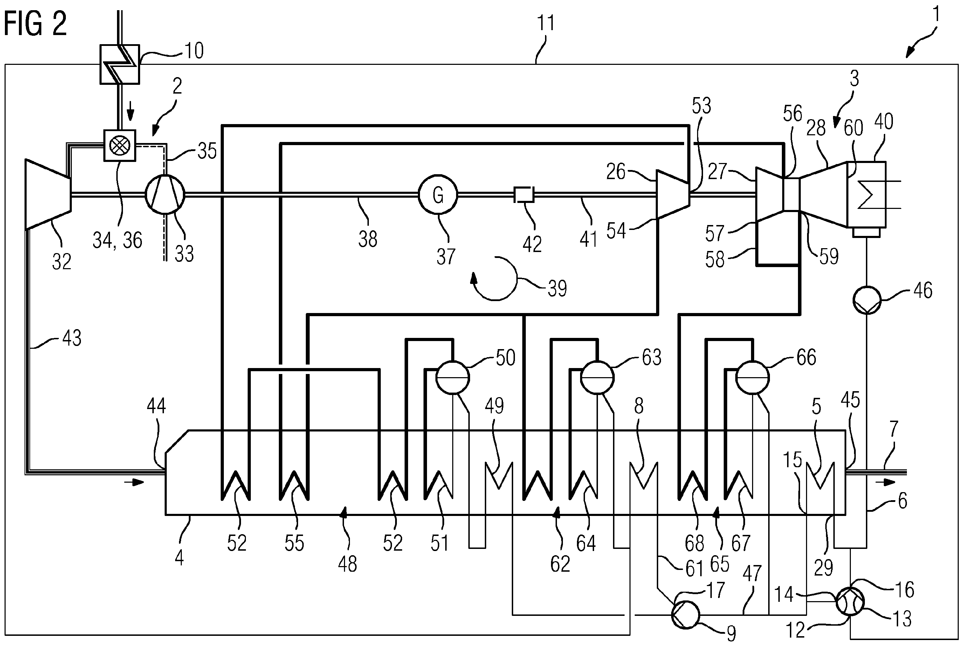

Die Figuren 2 bis 4 zeigen eine Gas- und Dampfturbinenanlage 1 gemäß der Erfindung. Figur 2 zeigt insbesondere die Komponenten der Gas- und Dampfturbinenanlage 1, die im Gasbetrieb für die Kondensatrezirkulation relevant sind. Die Druckenergie des von der Brennstoffvorwärmung 10 kommenden Speisewassers wird nun nicht mehr wie im Stand der Technik weggedrosselt 69. Die von der Brennstoffvorwärmung 10 kommende Leitung 11 für abgekühltes Speisewasser mündet jetzt in einen Treibmediumeingang 12 einer Strahlpumpe 13, deren Saugmediumeingang 14 mit einem Austritt 15 des Kondensatvorwärmers 5 und deren Austritt 16 mit der Kondensatleitung 6 verbunden ist.

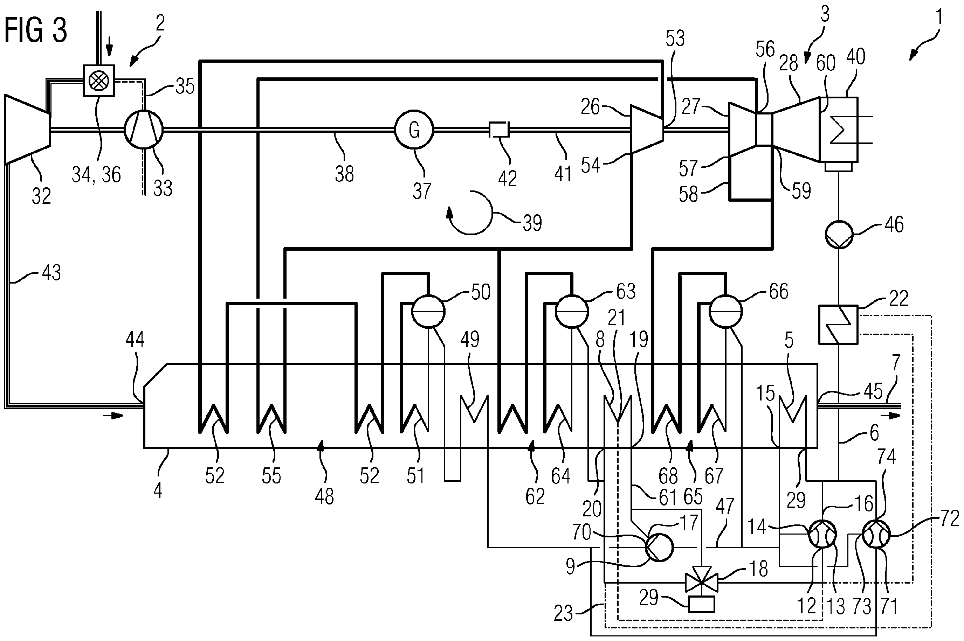

Figur 3 zeigt Ergänzungen zur Verschaltung der Figur 2, insbesondere für den Fall, dass neben dem Hauptbrennstoff Gas auch ein flüssiger Reservebrennstoff verwendet wird und die Brennstoffvorwärmung 10 als Wärmesenke entfällt. Werden keine Maßnahmen zur Senkung der Treibmassenstromtemperatur ergriffen, würde es zu unerwünschten Ausdampfungserscheinungen in der Strahlpumpe 13 kommen. Eine mögliche Maßnahme ist es, einen Ausgang 17 (also die Mitteldruckentnahme) der Speisewasserpumpe 9 in den Treibmediumeingang 12 der Strahlpumpe 13 zu schalten, beispielsweise über eine Regelarmatur 18 mit Regeleinrichtung 31 zum Umschalten zwischen oder Mischen von Speisewasser aus dem Speisewasservorwärmer 8 und Wasser aus der Speisewasserpumpe 9. Alternativ kann zwischen Eingang 19 und Ausgang 20 des Speisewasservorwärmers 8 eine Speisewasserentnahmestelle 21 vorgesehen sein, die in den Treibmediumeingang 12 der Strahlpumpe 13 schaltbar ist (gestrichelte Linie). Schließlich kann auch ein Wärmetauscher 22 primärseitig in eine Leitung 23 zum Treibmediumeingang 12 der Strahlpumpe 13 und sekundärseitig in die Kondensatleitung 6 geschaltet sein (strich-punktierte Linie).

Figur 3 zeigt auch die Möglichkeit des parallelen Betriebs zweier Strahlpumpen zur Kondensatvorwärmung. Konkret mündet dabei ein weiterer Ausgang 70 der Speisewasserpumpe 9 mit einem gegenüber dem Ausgang 17 erhöhten Druckniveau (oder, in der Figur 3 nicht gezeigt, ein Ausgang einer weiteren Speisewasserpumpe mit gegenüber der Speisewasserpumpe 9 erhöhtem Druckniveau) in einen Treibmediumeingang 71 einer weiteren Strahlpumpe 72, deren Saugmediumeingang 73 mit einem Austritt 15 des Kondensatvorwärmers 5 und deren Austritt 74 mit der Kondensatleitung 6 verbunden ist. Insbesondere für den Ölbetrieb ist diese Anordnung bzw. deren Betrieb vorteilhaft, da die vorhandene Speisepumpe 9 (oder die vorhandenen Speisepumpen) Kapazitäten "übrig hat", die auf diese Art genutzt werden können, zumal gerade im Ölbetrieb eine Kondensatvorwärmung aufgrund des vergleichsweise höheren Schwefelanteils im Brennstoff notwendig ist. Obwohl die Figur 3 für die Hochdruckstufe 48 lediglich die Variante der Speisewasserentnahme am Auslass 70 der Pumpe 9 zeigt, sind für die Hochdruckstufe 48 sämtliche Varianten zum Betrieb der weiteren Strahlpumpe 72, wie sie für die Mitteldruckstufe 62 und den Betrieb der Strahlpumpe 13 gezeigt sind, ebenfalls denkbar, d.h. beispielsweise auch eine Entnahme des Speisewassers nach dem Hochdruckspeisewasservorwärmer 49, ein Mischen von Speisewasser, das vor und nach dem Hochdruckspeisewasservorwärmer 49 entnommen wird und auch eine Entnahme von Hochdruckspeisewasser an einer Stelle dazwischen.

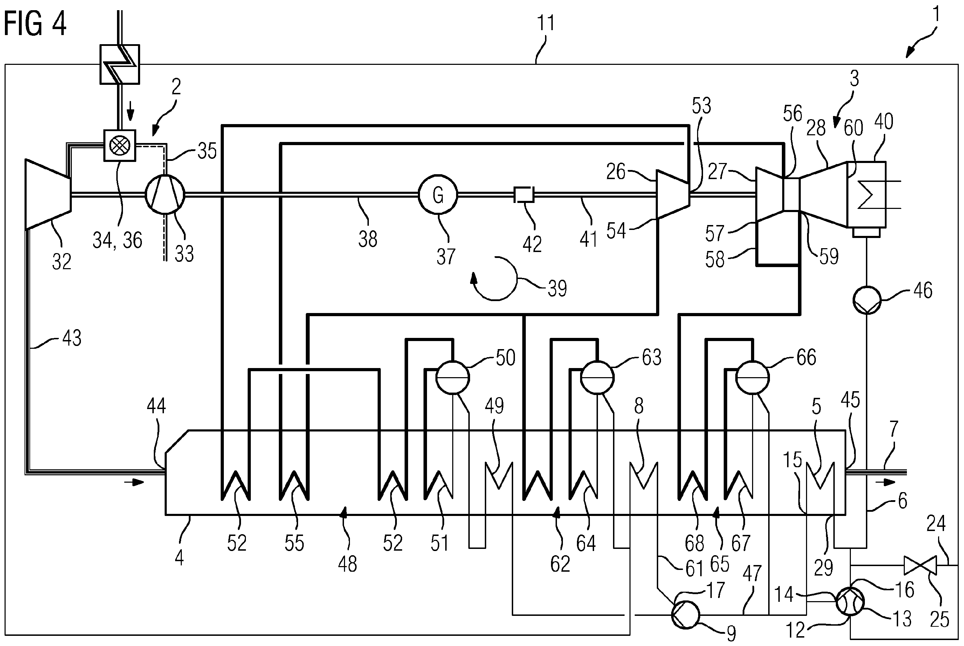

Figur 4 zeigt eine Ausführungsform der Gas- und Dampfturbinenanlage 1 nach der Erfindung, bei der eine Umführungsleitung 24 für ein Treibmedium um die Strahlpumpe 13 herumführt und in der Umführungsleitung 24 ein Treibmassenstromregelventil 25 angeordnet ist. Damit kann die Menge des Austrittsmassenstromes der Strahlpumpe (d.h. der Rezirkulationsmassenstrom) unabhängig von der Menge an Heizmedium für die Brenngasvorwärmung 10 eingestellt werden.

## Patentansprüche

1. Gas- und Dampfturbinenanlage (1) mit mindestens einer Gasturbine (2), einer Dampfturbine (3) und mindestens einem Abhitzedampferzeuger (4), der Abhitzedampferzeuger (4) umfassend mindestens einen Kondensatvorwärmer (5), in den eine Kondensatleitung (6) mündet, **gekennzeichnet durch** einen in Strömungsrichtung eines Gasturbinenabgases (7) dem Kondensatvorwärmer (5) vorgeschalteten Speisewasservorwärmer (8), dem Speisewasser-seitig eine Speisewasserpumpe (9) vorgeschaltet ist und der mit einer Brennstoffvorwärmung (10) für die Gasturbine (2) verbunden ist, wobei von der Brennstoffvorwärmung (10) eine Leitung (11) für abgekühltes Speisewasser in einen Treibmediumeingang (12) einer Strahlpumpe (13) mündet, deren Saugmediumeingang (14) mit einem Austritt (15) des Kondensatvorwärmers (5) und deren Austritt (16) mit der Kondensatleitung (6) verbunden ist.

2. Gas- und Dampfturbinenanlage (1) nach Anspruch 1, wobei ein Ausgang (17) der Speisewasserpumpe (9) in den Treibmediumeingang (12) der Strahlpumpe (13) schaltbar ist.

3. Gas- und Dampfturbinenanlage (1) nach einem der Ansprüche 1 oder 2, wobei eine Regelarmatur (18) zum Umschalten zwischen Speisewasser aus dem Speisewasservorwärmer (8) und Wasser aus der Speisewasserpumpe (9) oder Mischen von Speisewasser aus dem Speisewasservorwärmer (8) und Wasser aus der Speisewasserpumpe (9) vorgesehen ist.

4. Gas- und Dampfturbinenanlage (1) nach einem der Ansprüche 1 oder 2, wobei zwischen einem Eingang (19) und einem Ausgang (20) des Speisewasservorwärmers (8) eine Speisewasserentnahmestelle (21) vorgesehen ist, die in den Treibmediumeingang (12) der Strahlpumpe (13) schaltbar ist.

5. Gas- und Dampfturbinenanlage (1) nach einem der vorhergehenden Ansprüche, wobei ein Wärmetauscher (22) primärseitig in eine Leitung (23) zum Treibmediumeingang (12) der Strahlpumpe (13) und sekundärseitig in die Kondensatleitung (6) geschaltet ist.

6. Gas- und Dampfturbinenanlage (1) nach einem der vorhergehenden Ansprüche, wobei eine Umführungsleitung (24) für ein Treibmedium um die Strahlpumpe (13) herumführt und in der Umführungsleitung (24) ein Treibmassenstromregelventil (25) angeordnet ist.

7. Gas- und Dampfturbinenanlage (1) nach einem der Ansprüche 2 bis 6, wobei ein weiterer Ausgang (70) der Speisewasserpumpe (9) mit einem gegenüber dem Ausgang (17) erhöhten Druckniveau oder ein Ausgang einer weiteren Speisewasserpumpe mit gegenüber der Speisewasserpumpe (9) erhöhtem Druckniveau in einen Treibmediumeingang (71) einer weiteren Strahlpumpe (72) mündet, deren Saugmediumeingang (73) mit einem Austritt (15) des Kondensatvorwärmers (5) und deren Austritt (74) mit der Kondensatleitung (6) verbunden ist.

8. Verfahren zur Kondensatrezirkulation in einer Gas- und Dampfturbinenanlage (1), bei dem im Gasbetrieb Brennstoff durch in einem Speisewasservorwärmer (8) eines Abhitzedampferzeugers (4) erhitztes Speisewasser erwärmt wird, wobei sich das Speisewasser abkühlt, **dadurch gekennzeichnet, dass** das abgekühlte Speisewasser als Treibmassenstrom in einer Strahlpumpe (13) genutzt wird, um Kondensat von einem Austritt (15) eines Kondensatvorwärmers (5) anzusaugen und wobei ein aus Speisewasser und Kondensat resultierender Gemischstrom einem Kondensatstrom vor Eintritt in einen im Abhitzedampferzeuger (4) angeordneten Kondensatvorwärmer (5) beigemischt wird.

9. Verfahren nach Anspruch 8, wobei im Flüssigbrennstoffbetrieb der Gas- und Dampfturbinenanlage (1) Speisewasser vor Eintritt in den Abhitzedampferzeuger (4) als Treibmassenstrom in der Strahlpumpe (13) genutzt wird.

10. Verfahren nach einem der Ansprüche 8 oder 9, wobei eine Temperatur des als Treibmassenstrom für die Strahlpumpe (13) verwendeten Speisewassers geregelt wird, indem zwischen Speisewasser vor Eintritt in den Abhitzedampferzeuger (4) und erhitztem Speisewasser umgeschaltet wird oder diese geeignet gemischt werden.

11. Verfahren nach Anspruch 8, wobei für einen Betrieb der Strahlpumpe (13) dem Speisewasservorwärmer (8) Speisewasser an einer Speisewasserentnahmestelle (21) entnommen wird, die in Strömungsrichtung des Speisewassers stromauf eines Ausgangs (20) des Speisewasservorwärmers (8) angeordnet ist.

12. Verfahren nach einem der Ansprüche 8 bis 11, wobei eine Temperatur des Treibmassenstroms im Wärmetausch mit dem Kondensatstrom verringert wird.

13. Verfahren nach einem der Ansprüche 8 bis 12, wobei der Treibmassenstrom bei Bedarf geregelt über eine Umführungsleitung (24) ganz oder teilweise an der Strahlpumpe (13) vorbeigeleitet wird.

14. Verfahren nach einem der Ansprüche 8 bis 13, wobei Speisewasser verschiedener Druckstufen (26, 27) als Treibmassenstrom für die Strahlpumpe (13) oder eine weitere Strahlpumpe (72) genutzt wird.

## Claims

1. Combined-cycle turbine plant (1) with at least one gas turbine (2), a steam turbine (3) and at least one waste heat steam generator (4), the waste heat steam generator (4) comprising at least one condensate preheater (5) into which a condensate line (6) leads, **characterized by** a feedwater preheater (8) connected upstream of the condensate preheater (5) in the direction of flow of a gas turbine waste gas (7), upstream of which feedwater preheater a feedwater pump (9) is connected and which is connected with a fuel preheating unit (10) for the gas turbine (2), wherein a line (11) for cooled feedwater leads from the fuel preheating unit (10) into a pump medium inlet (12) of a jet pump (13), the suction medium inlet (14) of which is connected to an outlet (15) of the condensate preheater (5) and the outlet (16) of which is connected to the condensate line (6).

2. Combined-cycle turbine plant (1) according to Claim 1, wherein an outlet (17) of the feedwater pump (9) may be connected into the pump medium inlet (12) of the jet pump (13) .

3. Combined-cycle turbine plant (1) according to one of Claims 1 or 2, wherein a control valve (18) is provided for changing over between feedwater from the feedwater preheater (8) and water from the feedwater pump (9) or for mixing feedwater from the feedwater preheater (8) and water from the feedwater pump (9).

4. Combined-cycle turbine plant (1) according to one of Claims 1 or 2, wherein a feedwater extraction point (21) is provided between an inlet (19) and an outlet (20) of the feedwater preheater (8), which feedwater extraction point may be connected into the pump medium inlet (12) of the jet pump (13).

5. Combined-cycle turbine plant (1) according to one of the preceding claims, wherein a heat exchanger (22) is connected on the primary side into a line (23) to the pump medium inlet (12) of the jet pump (13) and on the secondary side into the condensate line (6).

6. Combined-cycle turbine plant (1) according to one of the preceding claims, wherein a bypass line (24) for a pump medium may be guided around the jet pump (13) and a pump fluid mass flow regulator valve (25) is arranged in the bypass line (24).

7. Combined-cycle turbine plant (1) according to one of Claims 2 to 6, wherein a further outlet (70) of the feedwater pump (9) with a pressure level raised relative to the outlet (17) or an outlet of a further feedwater pump with a pressure level raised relative to the feedwater pump (9) leads into a pump medium inlet (71) of a further jet pump (72), the suction medium inlet (73) of which is connected to an outlet (15) of the condensate preheater (5) and the outlet (74) of which is connected to the condensate line (6).

8. Method for condensate recirculation in a combined-cycle turbine plant (1) in which, in gas operation, fuel is heated by feedwater heated in a feedwater preheater (8) of a waste heat steam generator (4), wherein the feedwater cools, **characterized in that** the cooled feedwater is used as the pump fluid mass flow in a jet pump (13) to draw in condensate from an outlet (15) of a condensate preheater (5) and wherein a mixed flow resulting from feedwater and condensate is admixed with a condensate flow before entry into a condensate preheater (5) arranged in the waste heat steam generator (4).

9. Method according to Claim 8, wherein in liquid fuel operation of the combined-cycle turbine plant (1) feedwater before entry into the waste heat steam generator (4) is used as the pump fluid mass flow in the jet pump (13).

10. Method according to one of Claims 8 or 9, wherein a temperature of the feedwater used as the pump fluid mass flow for the jet pump (13) is controlled by changing over between feedwater before entry into the waste heat steam generator (4) and heated feedwater or by mixing these suitably.

11. Method according to Claim 8, wherein, for operation of the jet pump (13), feedwater is extracted from the feedwater preheater (8) at a feedwater extraction point (21) which is arranged upstream of an outlet (20) of the feedwater preheater (8) in the direction of flow of the feedwater.

12. Method according to one of Claims 8 to 11, wherein a temperature of the pump fluid mass flow is reduced by heat exchange with the condensate flow.

13. Method according to one of Claims 8 to 12, wherein the pump fluid mass flow is guided if necessary in a controlled manner wholly or in part past the jet pump (13) via a bypass line (24).

14. Method according to one of Claims 8 to 13, wherein feedwater from different pressure stages (26, 27) is used as a pump fluid mass flow for the jet pump (13) or a further jet pump (72).

## Revendications

1. Installation (1) à turbine à gaz et à turbine à vapeur comprenant au moins une turbine (2) à gaz, une turbine (3) à vapeur et au moins un générateur (4) de vapeur à récupération de la chaleur perdue, le générateur (4) de vapeur à récupération de la chaleur perdue comprenant au moins un préchauffeur (5) de condensat, dans lequel débouche un conduit (6) pour du condensat, **caractérisé par** un préchauffeur (8) d'eau d'alimentation monté dans le sens de passage des gaz d'échappement (7) de la turbine en amont du préchauffeur (5) de condensat, qui a une pompe (9) d'eau d'alimentation en amont du point de vue de l'eau d'alimentation et qui est relié à un préchauffage (10) de combustible pour la turbine (2) à gaz, dans laquelle
du préchauffage (10) de combustible, un conduit (11) pour de l'eau d'alimentation refroidie débouche dans une entrée (12) d'agent moteur d'un éjecteur (13), dont l'entrée (14) d'agent d'aspiration est reliée à une sortie (15) du préchauffeur (5) de condensat et dont la sortie (16) est reliée au conduit (6) pour du condensat.

2. Installation (1) à turbine à gaz et à turbine à vapeur suivant la revendication 1, dans laquelle une sortie (17) de la pompe (9) d'eau d'alimentation peut être branchée dans l'entrée (12) d'agent moteur de l'éjecteur (13).

3. Installation (1) à turbine à gaz et à turbine à vapeur suivant l'une des revendications 1 ou 2, dans laquelle il est prévu un robinet (18) de réglage pour commuter entre de l'eau d'alimentation provenant du préchauffeur (8) d'eau d'alimentation et de l'eau provenant de la pompe (9) d'eau d'alimentation ou pour mélanger de l'eau d'alimentation provenant du préchauffeur (8) d'eau d'alimentation et de l'eau provenant de la pompe (9) d'eau d'alimentation.

4. Installation (1) à turbine à gaz et à turbine à vapeur suivant l'une des revendications 1 ou 2, dans laquelle il est prévu, entre une entrée (19) et une sortie (20) du préchauffeur (8) d'eau d'alimentation, un point (21) de prélèvement d'eau d'alimentation, qui peut être branché dans l'entrée (12) de fluide moteur de l'éjecteur (13).

5. Installation (1) à turbine à gaz et à turbine à vapeur suivant l'une des revendications précédentes, dans laquelle un échangeur de chaleur (22) est monté, du côté primaire dans un conduit (23) menant à l'entrée (12) d'agent moteur de l'éjecteur (13) et, du côté secondaire, au conduit (6) pour du condensat.

6. Installation (1) à turbine à gaz et à turbine à vapeur suivant l'une des revendications précédentes, dans laquelle un conduit (24) de contournement pour un agent moteur contourne l'éjecteur (13) et dans le conduit (24) de contournement est montée une vanne (25) de régulation du courant massique de l'agent moteur.

7. Installation (1) à turbine à gaz et à turbine à vapeur suivant l'une des revendications 2 à 6, dans laquelle une autre sortie (70) de la pompe (9) d'eau d'alimentation, ayant un niveau de pression élevé par rapport à la sortie (17), ou une sortie d'une autre pompe, ayant un niveau de pression élevée par rapport à la pompe (9) d'eau d'alimentation, débouche dans une entrée (71) d'agent moteur d'un autre éjecteur (72), dont l'entrée (73) d'agent d'aspiration est reliée à une sortie (15) du préchauffeur (5) de condensat et dont la sortie (74) est reliée au conduit (6) pour du condensat.

8. Procédé de recirculation de condensat dans une installation (1) à turbine à gaz et à turbine à vapeur, dans lequel on chauffe, dans le fonctionnement au gaz, du combustible par de l'eau d'alimentation chauffée dans un préchauffeur (8) d'eau d'alimentation d'un générateur (4) de vapeur à récupération de la chaleur perdue, dans lequel l'eau d'alimentation se refroidit, **caractérisé en ce que** l'on utilise l'eau d'alimentation refroidie comme courant massique d'agent moteur dans un éjecteur (13) pour aspirer du condensat d'une sortie (15) d'un préchauffeur (5) de condensat et dans lequel on mélange un courant de mélange provenant de l'eau d'alimentation et du condensat à un courant de condensat avant l'entrée dans un préchauffeur (5) de condensat disposé dans le générateur (4) de vapeur à récupération de la chaleur perdue.

9. Procédé suivant la revendication 8, dans lequel, dans le fonctionnement au combustible liquide de l'installation (1) à turbine à gaz et à turbine à vapeur, on utilise l'eau d'alimentation avant l'entrée dans le générateur (4) de vapeur à récupération de la chaleur perdue comme courant massique d'agent moteur dans l'éjecteur (13).

10. Procédé suivant l'une des revendications 8 ou 9, dans lequel on régule une température de l'eau d'alimentation utilisée comme courant massique d'agent moteur pour l'éjecteur (13) en commutant, en passant entre de l'eau d'alimentation avant l'entrée dans le générateur (4) de vapeur à récupération de la chaleur perdue et de l'eau d'alimentation chauffée ou en les mélangeant de manière appropriée.

11. Procédé suivant la revendication 8, dans lequel, pendant un fonctionnement de l'éjecteur (13), on prélève de l'eau d'alimentation du préchauffeur (8) d'eau d'alimentation en un point (21) de prélèvement d'eau d'alimentation, qui est, dans le sens de passage de l'eau d'alimentation, en amont d'une sortie (20) du préchauffeur (8) d'eau d'alimentation.

12. Procédé suivant l'une des revendications 8 à 11, dans lequel on abaisse la température du courant massique d'agent moteur par échange de chaleur avec le courant de condensat.

13. Procédé suivant l'une des revendications 8 à 12, dans lequel on fait contourner en tout ou partie l'éjecteur (13) par le courant massique d'agent moteur, d'une manière réglée en cas de besoin par un conduit (24) de contournement.

14. Procédé suivant l'une des revendications 8 à 13, dans lequel on utilise de l'eau d'alimentation d'étages (26, 27) de pression différents comme courant massique d'agent moteur pour l'éjecteur (13) ou pour un autre éjecteur (72).
